**Europäisches Patentamt**

**European Patent Office**

**Office européen des brevets**

(19)

(11) Numéro de publication: **0 152 325**
**B1**

## (12) FASCICULE DE BREVET EUROPÉEN

(45) Date de publication du fascicule du brevet:
21.09.88

(21) Numéro de dépôt: **85400134.4**

(22) Date de dépôt: **28.01.85**

(51) Int. Cl.⁴: **G 11 B 5/17,** G 11 B 5/31

(54) **Procédé de réalisation d'un bobinage pour tête magnétique d'enregistrement et bobinage obtenu par ce procédé.**

(30) Priorité: **03.02.84 FR 8401878**

(43) Date de publication de la demande:
**21.08.85 Bulletin 85/34**

(45) Mention de la délivrance du brevet:
**21.09.88 Bulletin 88/38**

(84) Etats contractants désignés:
**BE CH DE FR GB IT LI NL**

(73) Titulaire: **COMMISSARIAT A L'ENERGIE ATOMIQUE, 31/33, rue de la Fédération, F-75015 Paris (FR)**

(72) Inventeur: **Lazzari, Jean-Pierre, 45, Chemin de Malanot, F-38700 Corenc (FR)**

(74) Mandataire: **Mongrédien, André, c/o BREVATOME 25, rue de Ponthieu, F-75008 Paris (FR)**

(56) Documents cité:
EP-A-0 013 782
DE-A-1 564 820
FR-A-2 510 290
US-A-1 820 240
US-A-3 685 144

IEEE TRANSACTIONS ON MAGNETICS, vol. MAG-17, no. 4, juillet 1981, pages 1383-1386, IEEE, New York, US; A.M. GINDI et al.: "Design considerations for the DASTEK 4830 disk drive"
JOURNAL OF APPLIED PHYSICS, vol. 53, no. 3, partie II, mars 1982, pages 2611-2613, American Institute of Physics, New York, US; Y. NORO et al.: "Fabrication of a multitrack, thin-film head"
REVIEW OF THE ELECTRICAL COMMUNICATION LABORATORIES, vol. 30, no. 3, 1982, pages 459-466, Tokyo, JP; T. NAKANISHI et al.: "Floating thin film magnetic head"

(56) Documents cité: (suite)
PATENTS ABSTRACTS OF JAPAN, vol. 5, no. 107 (P-70) 779, 11 juillet 1981
PATENTS ABSTRACTS OF JAPAN, vol. 4, no. 78 (P-14) 560, 6 juin 1980, page 42P14
PATENTS ABSTRACTS OF JAPAN, vol. 5, no. 118 (P-73) 790, 30 juillet 1981
PATENTS ABSTRACTS OF JAPAN, vol. 6, no. 82 (P-116) 960, 20 mai 1982
PATENTS ABSTRACTS OF JAPAN, vol. 5, no. 150 (P-81) 822, 22 septembre 1981
PATENTS ABSTRACTS OF JAPAN, vol. 6, no. 182 (E-131) 1060, 18 septembre 1982, page 15E131

## Description

La présente invention a pour objet un procédé de réalisation d'un bobinage pour tête magnétique d'enregistrement et un bobinage obtenu par ce procédé. Elle trouve une application dans le domaine de l'enregistrement magnétique, des mémoires à disques, des dérouleurs de bandes, du vidéoscope, etc...

Une tête magnétique d'enregistrement comprend un circuit magnétique ouvert, présentant un entrefer et un bobinage entourant une jambe du circuit magnétique. A l'écriture, le passage d'un courant dans le bobinage, crée un champ de fuite au niveau de l'entrefer, qui permet d'écrire, dans une couche d'enregistrement placée à proximité, des informations. A la lecture, une variation de flux magnétique provenant de la couche d'enregistrement induit, aux bornes du bobinage, une différence de potentiel qui constitue un signal de lecture.

Un bobinage de tête magnétique d'enregistrement est constitué en général de une ou plusieurs spirales conductrices disposées dans des plans différents. Pour réaliser un tel bobinage, on forme déjà une première spirale conductrice par dépôt puis gravure d'une couche métallique, puis on dépose une couche isolante sur l'ensemble et l'on réitère le procédé pour réaliser une deuxième spirale située sur cette couche isolante. Les gravures s'effectuent à travers des masques et les deux masques utilisés sont disposés de telle manière que les deux spirales soient décalées l'une par rapport à l'autre.

Une telle technique est décrite notamment dans l'article de Y. NORO et al intitulé "Fabrication of a multitrack thin-film head" publié dans "Journal of Applied Physics, 53(3), March 1982, pp 2611, 2613".

De tels procédés, s'ils conviennent bien à certains égards, sont néammoins difficiles à mettre en oeuvre, notamment en raison du double masquage nécessaire à la définition du bobinage. Il faut en effet positionner le second masque avec une grande précision par rapport au premier, ou plus exactement par rapport à la première spirale obtenue.

L'invention a justement pour but de remédier à cet inconvénient en proposant un procédé qui ne fait appel qu'à un seul masquage et qui permet néammoins d'obtenir deux enroulements.

Ce but est atteint selon l'invention par un procédé qui comprend tout d'abord une première phase classique dans la technique du dépôt de couches minces puis une seconde phase originale qui consiste essentiellement à déposer au fond d'une gorge en spirale et simultanément sur la matière comprise entre deux bras de la spirale, une couche conductrice. De cette manière deux spirales conductrices sont obtenues simultanément dans deux plans différents, le seul masquage mis en oeuvre étant celui qui permet de réaliser la gorge. Il y a donc autoalignement des deux rubans conducteurs. En outre, les deux spirales obtenues sont rigoureusement complémentaires en ce sens que, vues perpendiculairement à leur plan, ces deux spirales recouvrent la totalité du plan. Dans l'art antérieur il y a toujours un chevauchement des deux spirales, ce qui entraîne des risques de claquage.

De façon précise, l'invention a pour objet un procédé de réalisation d'un bobinage pour tête magnétique d'enregistrement dans lequel:
- on recouvre un support isolant par une couche isolante mince,
- on grave la couche isolante par photolithogravure pour lui donner la forme d'une première spirale avec, au centre, une zone élargie définissant un futur plot de contact intérieur et, à la périphérie, une zone définissant un futur plot de contact extérieur,
- on grave le support en utilisant la couche isolante comme masque, ce qui conduit à une gorge en forme de seconde spirale complémentaire de la première, ce procédé étant caractérisé en ce que:
- on dépose une mince couche de métal sur l'ensemble, c'est-à-dire sur la couche isolante ayant servi de masque et, simultanément, au fond de la gorge gravée, ce qui donne naissance à deux conducteurs en forme de spirales complémentaires l'une de l'autre et situées dans deux plans différents, ces spirales se terminant par un plot de contact à l'intérieur et un plot de contact à l'extérieur,
- on donne à la mince couche de métal une épaisseur faible devant la profondeur de la gorge,
- on dépose une résine photosensible sur l'ensemble puis on dégage cette résine en dehors de la zone des spirales et, par gravure, on élimine la couche de métal superflue déposée sur la couche isolante en dehors des spirales,
- on enlève la résine,
- on effectue une connexion électrique entre le plot de contact intérieur d'une spirale et le plot de contact extérieur de l'autre spirale.

L'invention a également pour objet un bobinage obtenu par ce procédé. Le bobinage a les caractéristiques indiquées dans la revendication 7.

D'autres caractéristiques et avantages de l'invention ressortiront mieux de la description qui va suivre en référence à des dessins annexés, sur lesquels:
- les figures 1, 2, 3, 4, 5, 6 et 7 montrent, en coupe, les principales étapes du procédé de l'invention;
- la figure 8 représente le bobinage vu perpendiculairement à son plan;
- la figure 9 montre une coupe d'une tête magnétique d'enregistrement utilisant le bobinage objet de l'invention.

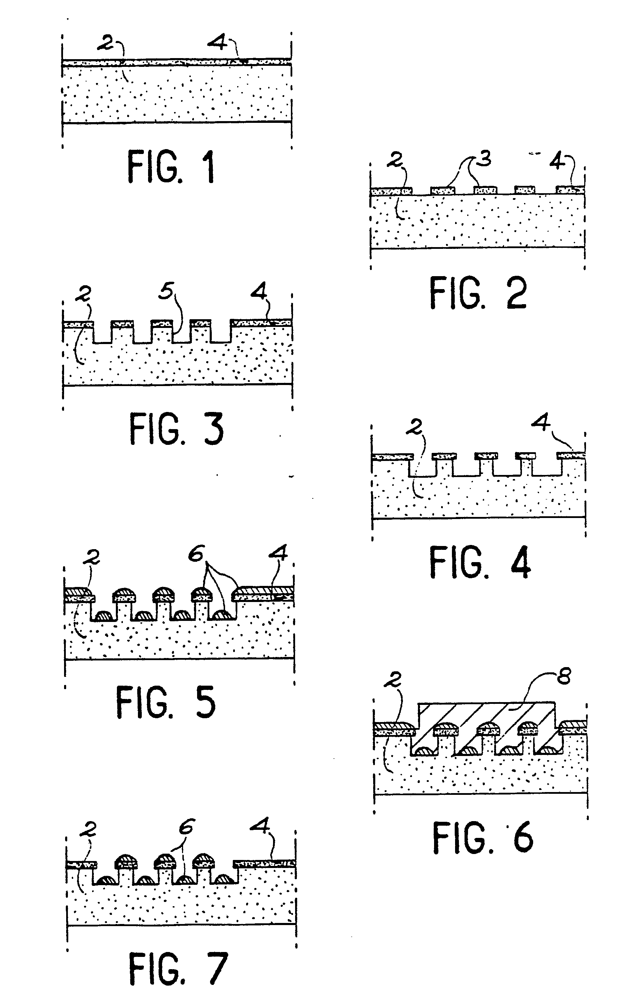

La figure 1 représente un support 2 constitué d'un matériau isolant électriquement, comme du verre, de la silice ou une couche organique par exemple. Ce support est recouvert d'une couche mince 4 d'épaisseur inférieure ou égale au micron, d'un matériau également isolant électrique et qui peut être par exemple une couche organique, de la silice ou du nitrure de silicium. Cette couche 4 doit pouvoir se graver sélectivement, par rapport au support 2, selon les méthodes de photolithogravure connues de l'homme de l'art.

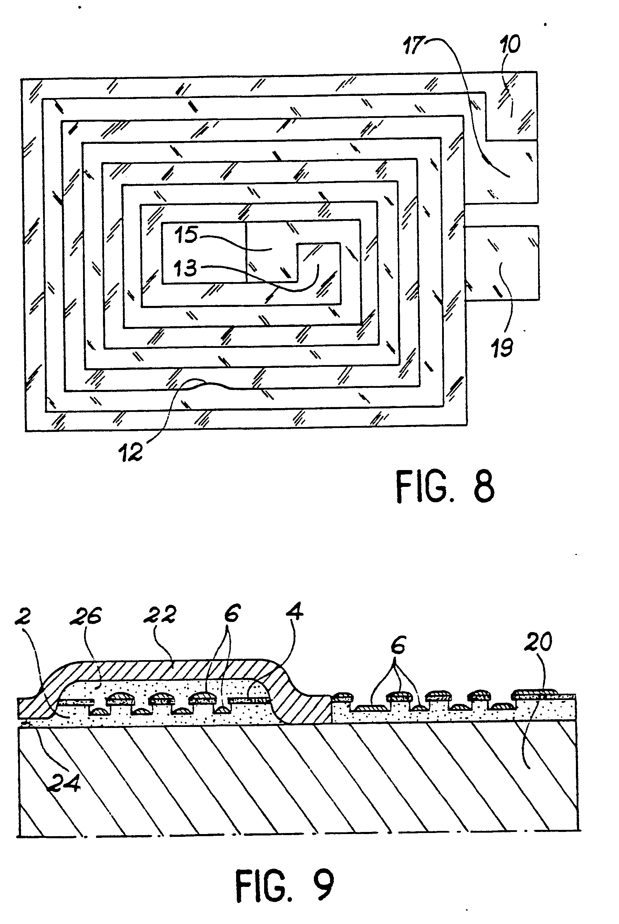

La figure 2 illustre le résultat de la gravure de la couche 4. La matière qui subsiste dessine une spirale 3 avec au centre et à la périphérie des zones élargies comme on le verra mieux sur la figure 8.

La figure 3 illustre la gravure d'une gorge 5 obtenue en utilisant la couche 4 comme masque.

La figure 4 montre une surgravure du support 2, qui, ne touchant pas la couche 4, fait que celle-ci déborde en surplomb sur chaque paroi verticale de la gorge pratiquée dans le support 2.

La figure 5 montre le dépôt d'une couche électriquement conductrice 6 qui peut être du cuivre, ou tout autre métal bon conducteur de l'électricité. Ce dépôt est fait préférentiellement sous vide. On voit que la couche de cuivre est déposée au fond de la gorge 5 et sur ce qui reste de la couche 4, sans recouvrir les flancs verticaux de la gorge. Ces dépôts délimitent ainsi deux spirales complémentaires, sans court-circuit entre elles. Ces deux spirales se situent sur deux plans différents: le plan supérieur de la couche 4, et le fond de la gorge gravée dans le support 2.

La figure 6 montre une réservation de résine photosensible 8 qui permet, par gravure, d'éliminer les parties du dépôt de la couche 6 sur le plan de la couche 4 qui sont superflues.

La figure 7 illustre le résultat final.

La figure 8 illustre la forme de bobinage vu perpendiculairement à son plan. La partie gravée dans le support 2 est représenté par la spirale partant de la zone élargie 10 pour se terminer sur la zone élargie 13. La spirale obtenue sur le plan supérieur de la couche 4, commence sur la zone 17 et se termine en 15. Pour constituer une double spirale, avec continuité de l'enroulement dans le même sens, il suffit de raccorder, selon des méthodes connues, la zone 13 à la zone 17. L'entrée du bobinage sera alors le plot 10 et sa sortie le plot 15, qu'il sera possible de raccorder pour plus de facilité à un plot 19.

La figure 8 montre que les bras des deux spirales sont rigoureusement complémentaires, sans perte de place, ceci étant obtenu tout en garantissant un excellent isolement entre chaque conducteur. S'il advient par exemple qu'une irrégularité 12 se manifeste dans le tracé de la gorge, cette irrégularité ne modifiera en rien la complémentarité des deux spirales conductrices, l'une devant être plus large que l'autre, mais les spirales ne pouvant jamais empiéter l'une sur l'autre. Une gravure précise peut être obtenue si l'on choisit des matériaux isolants que l'on peut graver facilement, alors que le métal de la couche 6 ne peut être que difficilement gravé avec finesse. Dans l'invention, le métal n'est gravé que pour détourer les plots de contact 17, 19, ou 15, ce qui ne requiert pas une grande précision.

Pour toutes ces raisons, on choisira pour couche 4 une couche dure, comme la silice ou le nitrure de silicium. Par ailleurs, pour éviter les risques de courtcircuit entre les deux spirales, on limitera l'épaisseur du dépôt métallique 6 à environ 1/3 de la profondeur de la gorge. On donnera à celle-ci par exemple une profondeur allant de 1,5 à 4 μm et à la couche métallique une épaisseur allant de 0,5 à 1 μm.

La figure 9 montre, en coupe, une tête magnétique utilisant le bobinage objet de l'invention. Le support 2 est déposé sur un matériau magnétique 20 massif ou en couche mince. Ce matériau constitue la première pièce polaire de la tête. Une seconde pièce polaire 22 également constituée de matériau magnétique en couche mince ou massif, est isolée électriquement des conducteurs du bobinage, par une couche isolante électriquement 26. A l'avant de la tête un entrefer 24 sépare les pièces 20 et 22, alors qu'à l'arrière les deux pièces polaires se rejoignent, afin de refermer le circuit magnétique autour du bobinage. Afin d'obtenir un bon rendement magnétique de la tête, il est important que la distance séparant l'entrefer de la zone de fermeture arrière des deux pièces polaires soit la plus courte possible. La double spirale, dans la mesure où elle conduit à des conducteurs adjacents, permet, pour une dimension donnée des conducteurs, de réduire au minimum cette distance.

Naturellement, on pourrait empiler plusieurs fois des doubles spirales isolées entre elles.

## Revendications

1. Procédé de réalisation d'un bobinage pour tête magnétique d'enregistrement dans lequel:
- on recouvre un support isolant (2) par une couche isolante mince (4),
- on grave la couche isolante (4) par photolithogravure pour lui donner la forme d'une première spirale avec, au centre, une zone élargie définissant un futur plot de contact intérieur et, à la périphérie, une zone définissant un futur plot de contact extérieur,
- on grave le support (2) en utilisant la couche isolante (4) comme masque, ce qui conduit à une gorge (5) en forme de seconde spirale complémentaire de la première, ce procédé étant caractérisé en ce que:
- on dépose une mince couche de métal (6) sur l'ensemble, c'est-à-dire sur la couche isolante (4) ayant servi de masque et, simultanément, au fond de la gorge gravée, ce qui donne naissance à deux conducteurs en forme de spirales complémentaires l'une de l'autre et situées dans deux plans différents, ces spirales se terminant par un plot de contact (13, 15) à l'intérieur et un plot de contact (10, 17) à l'extérieur,

- on donne à la mince couche de métal (6) une épaisseur faible devant la profondeur de la gorge,
- on dépose une résine photosensible sur l'ensemble puis on dégage cette résine en dehors de la zone des spirales et, par gravure, on élimine la couche de métal superflue déposée sur la couche isolante (4) en dehors des spirales,
- on enlève la résine,
- on effectue une connexion électrique entre le plot de contact intérieur (13) d'une spirale et le plot de contact extérieur (17) de l'autre spirale.

2. Procédé selon la revendication 1, caractérisé en ce qu'on surgrave le support (2) en prenant toujours la couche isolante (4) comme masque, ce qui a pour effet de mettre la couche isolante (4) en surplomb sur chaque paroi verticale définissant la gorge.

3. Procédé selon la revendication 1, caractérisé en ce que la couche isolante (4) est en silice ou en nitrure de silicium.

4. Procédé selon la revendication 1, caractérisé en ce que la couche métallique (6) au fond de la gorge (5) a une épaisseur d'environ 1/3 de la profondeur de la gorge.

5. Procédé selon la revendication 1, caractérisé en ce qu'on donne à la gorge (5) une profondeur allant de 1,5 à 4 µm.

6. Procédé selon la revendication 5, caractérisé en ce qu'on donne à la couche métallique (6) une épaisseur allant de 0,5 à 1 µm.

7. Bobinage pour tête magnétique d'enregistrement, ce bobinage comprenant, sur un support isolant (2) deux conducteurs en spirale disposés dans deux plans différents, un plan inférieur et un plan supérieur, ces deux spirales étant complémentaires l'une de l'autre, ce bobinage étant caractérisé en ce qu'il comprend:

- un support isolant (2),
- une couche isolante (4) en forme de première spirale avec, au centre, une zone élargie définissant un plot de contact intérieur et, à la périphérie, une zone définissant un plot de contact extérieur,
- une gorge (5) gravée dans le support (2) entre la couche isolante, cette gorge (5) ayant une forme de seconde spirale complémentaire de la première,
- une mince couche de métal (6) déposée sur la couche isolante (4) et au fond de la gorge gravée (5), cette couche donnant naissance à deux conducteurs en forme de spirales rigoureusement complémentaires l'une de l'autre et situées dans deux plans différents, ces spirales se terminant par un plot de contact (13, 15) à l'intérieur et un plot de contact (10, 17) à l'extérieur, la mince couche de métal (6) ayant une épaisseur faible devant la profondeur de la gorge.

**Patentansprüche**

1. Verfahren zur Herstellung einer Wicklung für einen Aufnahmemagnetkopf, bei dem
- man einen isolierenden Träger (2) mit einer dünnen Isolierschicht (4) überdeckt,
- man die Isolierschicht (4) durch Fotolithoätzen ätzt, um dieser die Form einer ersten Spirale mit einem vergrößerten Bereich in der Mitte, welcher ein späteres, inneres Kontaktstück festlegt, und einem Bereich am Umfang, welcher ein späteres äußeres Kontaktstück festlegt, zu geben,
- man den Träger (2) ätzt, indem die Isolierschicht (4) als Maske verwendet wird, was zu einer Nut (5) in der Form einer zweiten, zu der ersten komplementären Spirale führt, wobei dieses Verfahren dadurch gekennzeichnet ist, daß
- man eine dünne Metallschicht (6) auf die Gesamtheit aufbringt, d. h. auf die als Maske gedient habende Isolierschicht (4) und gleichzeitig auf den Boden der geätzten Nut, wodurch sich zwei Leiter in der Form komplementärer Spiralen ergeben, die sich in zwei unterschiedlichen Ebenen befinden, wobei diese Spiralen durch ein inneres Kontaktstück und ein äußeres Kontaktstück enden,
- man der dünnen Metallschicht (6) eine gegenüber der Tiefe der Nut geringe Dicke gibt,

man ein fotoempfindliches Harz auf die Gesamtheit auf bringt, dann dieses Harz außerhalb des Bereichs der Spiralen entfernt und man durch Ätzen die überflüssige Metallschicht entfernt, die außerhalb der Spiralen auf die Isolierschicht (4) aufgebracht ist,
- man das Harz entfernt,
- man eine elektrische Verbindung zwischen dem inneren Kontaktstück einer Spirale und dem äußeren Kontaktstück der anderen Spirale herstellt.

2. Verfahren nach Anspruch 1, dadurch gekennzeichnet, daß man den Träger (2) tief ätzt, wobei man stets die Isolierschicht (4) als Maske verwendet, was zur Folge hat, daß die Isolierschicht (4) auf jeder vertikalen, die Nut begrenzenden Wand vorsteht.

3. Verfahren nach Anspruch 1, dadurch gekennzeichnet, daß die Isolierschicht (4) aus Silicium oder Siliciumnitrid ist.

4. Verfahren nach Anspruch 1, dadurch gekennzeichnet, daß die Metallschicht (6) am Boden der Nut (5) eine Dicke von ungefähr 1/3 der Tiefe der Nut aufweist.

5. Verfahren nach Anspruch 1, dadurch gekennzeichnet, daß die Nut (5) eine Tiefe von 1,5 bis 4 µm erhält.

6. Verfahren nach Anspruch 5, dadurch gekennzeichnet, daß man der Metallschicht (6) eine Dicke von 0,5 bis 1 µm verleiht.

7. Wicklung für einen Aufzeichnungsmagnetkopf, die auf einem isolierenden Träger (2) zwei in zwei unterschiedlichen Ebenen, einer unteren Ebene und einer oberen Ebene, angeordnete, spiralförmige Leiter aufweist, wobei diese zwei Spiralen zueinander komplementär sind und diese Wicklung dadurch gekennzeichnet ist, daß sie umfaßt:

- einen isolierenden Träger (2),
- eine Isolierschicht (4) in der Form der ersten Spirale mit einem erweiterten Bereich in der Mitte, welcher ein inneres Kontaktstück festlegt, und am Umfang einem Bereich, welcher ein äußeres Kontaktstück festlegt,
- eine in den Träger (2) durch die Isolierschicht hindurch geätzte Nut (5), wobei diese Nut (5) die Form einer zweiten die erste ergänzende Spirale umfaßt,
- eine auf die Isolierschicht (4) und den Boden der geätzten Nut (5) aufgebrachte, dünne Metallschicht (6), wobei diese Schicht zwei Leiter in der Form von Spiralen erzeugt, die genau zueinander komplementär sind und sich in zwei unterschiedlichen Ebenen befinden und diese Spiralen an einem inneren Kontaktstück und einem äußeren Kontaktstück enden, wobei die dünne Metallschicht (6) eine geringe Dicke gegenüber der Tiefe der Nut aufweist.

## Claims

1. Process for producing a coil for a magnetic recording head in which an insulating support (2) is covered by a thin insulating film (4), the insulating film (4) is etched by photolithography in order to give it the shape of a first spiral with, at the centre, a wider area defining a future inner contact element and, on the periphery, an area defining a future outer contact element, the support (2) is etched by using the insulating film (4) as a mask, which leads to a groove (5) in the form of a second spiral, which is complementary to the first, characterized in that a thin metal layer (6) is deposited on the assembly, i.e. on the insulating film (4) used as the mask and simultaneously at the bottom of the etched groove, which gives rise to two conductors in the form of complementary spirals and located in two different planes, said spirals terminating by an inner contact element (13, 15) and an outer contact element (10, 17), the thin metal layer (6) has a small thickness compared with the depth of the groove, a photosensitive resin is deposited on the assembly, followed by the removal of the resin outside the area of the spiral, and by etching, the superfluous metal layer deposited on the insulating film (4) outside these spirals is removed, the resin is removed and an electrical connection is made between the inner contact element (13) of a spiral and the outer contact element (17) of the other spiral.

2. Process according to claim 1, characterized in that overetching of the support (2) takes place always using the insulatingfilm (4) as the mask, which has the effect of making each insulating film (4) overhang each vertical wall defining the groove.

3. Process according to claim 1, characterized in that the insulating film (4) is of silica or silicon nitride.

4. Process according to claim 1, characterized in that the metal deposit (6) at the bottom of the groove (5) has a thickness of approximately 1/3 of the depth of the groove.

5. Process according to claim 1, characterized in that the groove (5) is given a depth between 1.5 and 4 µm.

6. Process according to claim 5, characterized in that the metal film (6) is given a thickness between 0.5 and 1 µm.

7. Coil for magnetic recording head comprising on an insulating support (2) two spiral conductors arranged in two different planes, a lower plane and an upper plane, said two coils being complementary of one another, characterized in that it comprises an insulating support (2), an insulating film (4) in the form of a first spiral with, in the centre, a widened area defining an inner contact element and, at the periphery, an area defining an outer contact element, a groove (5) etched in the support (2) between the insulating film, said groove (5) having the shape of a second spiral complementary of the first, a thin metal layer (6) deposited on the insulating film (4) and at the bottom of the etched groove (5) and which leads to two spiral conductors which are strictly complementary of one another and located in two different planes, said spirals ending with an inner contact element (13, 15) and an outer contact element (10, 17), the thin metal layer (6) having a small thickness compared with the depth of the groove.

FIG. 1

FIG. 2

FIG. 3

FIG. 4

FIG. 5

FIG. 6

FIG. 7

FIG. 8

FIG. 9